# EUROPEAN PATENT APPLICATION

(11) **EP 4 160 359 A1**
(43) Date of publication of application: **05.04.2023**
(21) Application number: 20739427.1
(22) Date of filing: 01.06.2020
(51) Int. Cl.: G06F 3/01

(54) **CONTACTLESS TOUCH DEVICE AND METHOD BASED ON GESTURE DETECTION**

(71) Applicant: Ontech Security, S.L., 41309 La Rinconada (Sevilla) (ES)
(72) Inventor: APONTE LUIS, Juan, 41309 La Rinconada (ES)
(74) Representative: Sahuquillo Huerta, Jesús
(86) International application number: PCT/ES2020/070362
(87) International publication number: WO 2021/245295

(57) **Abstract**

The present invention relates to a system and method for detecting contactless touch by means of gesture detection, comprising the steps of installing at least one antenna (101) which is configured for receiving the signal of an electromagnetic field generated around same; and wherein said at least one antenna (101) is connected with a controlled electromagnetic field sensor (100) configured for generating an electric and magnetic field around said antenna (101); continuously measuring the variations in the electric and magnetic field generated around the antenna (101); detecting a gesture performed in the proximity of the antenna (101) corresponding and proportional to a disruption in the electric and magnetic field generated around the antenna (101); and activating an actuator (105) depending on the detected gesture.

## Description

### Technical Field of the Invention

The present invention relates to a device and method for detecting contactless touch by means of gesture detection with a range of up to one meter and applicable to any button or set of buttons, in any use or field of the art, and comprising the use of a sensor capable of measuring minimum impedance changes generated around the sensor. This sensor is based on controlled electromagnetic field (CEMF) technology.

### State of the Art

When an electric charge moves over a conductor, it creates an EM (electromagnetic) field around it. The oscillation of the charge source generates a wave radiating energy from said conductor, the EM field being the medium which allows transporting said energy a distance from its emitter. An electromagnetic wave is an electric field and another magnetic field that are coupled to one another and oscillate at the same frequency as the electric charge source. At a short distance from the emitter both fields are independent, but in the far-field zone both fields are coupled, and by knowing one, the value of the other can be determined.

In the known state of the art, capacitive sensors have been widely used in different applications, such as for controlling the level of a fluid inside a container, for controlling the fill level and the position of objects, or for counting materials on conveyor belts. In applications of another type relating to the medical sector, sensors of this type have also been used for measuring intraocular pressure, intracranial pressure, for diagnosing lung diseases, or measuring the respiratory system.

Within capacitive sensors, oscillator-based capacitive systems are known, in which the oscillation frequency is used as a parameter to determine the value of the capacity to be measured. Among the different types of existing oscillators, the oscillator which is used in applications such as that described in the present invention must, however, solve two technical problems:
a) The frequency sensitivity to small variations in the capacity to be measured must be high. This question is very important because when an object approaches the sensor, a disruption will occur in the EM field generated by the sensor and that small variation generated in the field is of vital importance for determining how far away the object is.
b) The oscillator must generate a stable frequency in the face of phenomena such as vibrations, temperature disruptions, and ultimately any possible sensor interference.

The basic principles of the detection and use of disruptions in the electromagnetic fields for people detection are described, for example, in document GB1404838. According to this invention, there is provided an alarm system comprising at least one ultra-high-frequency (UHF) oscillator circuit, at least one electromagnetic wave-radiating element connected to the oscillator circuit for radiating ultra-high-frequency electromagnetic radiation, wherein each of said electromagnetic wave-radiating elements is arranged such that movement in the vicinity of the element produces a very-low-frequency variation in the ultra-high-frequency impedance of the element, and therefore, a very low-frequency variation in the oscillation frequency of the oscillator circuit.

Other well known uses of capacitive technology are contact or contactless switches (such as the well-known touch screens). Nevertheless, as indicated above, the range of detection is very small (generally, they require contact with an outer surface under which the capacitive sensor is arranged). Furthermore, for outdoor applications, such as for buttons in lifts, switches for turning lights on or off, traffic light switches, among many other applications, in addition to being greatly affected by the presence of possible insulating elements, with the most recognizable case being that of gloves, although certain problems due to the earth connection or the use of insulating shoes have also been detected, a change in the environmental conditions (humidity, temperature) leads to reading variation which can hinder the closure of the circuit and generate interferences in the detection.

Examples of documents describing the use of capacitive technology in different applications are US4377049A, US4334219A, US5917165A, US5239152A, US4218603A, or ES2286283T3.

Therefore, the described problems make the use of capacitive detection technology in applications which require precision, reliability, and safety during use ineffective or undesirable. Furthermore, the different studies performed on the COVID-19 pandemic have demonstrated that the virus remains latent for hours or even days on different surfaces, for example, plastic or metal surfaces making up any type of button or set of buttons. To that end, there is a need for an effective solution which allows current or future use of the current buttons or switches without requiring contact.

### Description of the Invention

The object of the present invention relates to a device and method for detecting contactless touch by means of gesture detection which, as a result of the use of controlled electromagnetic field (CEMF) technology, allows distinguishing typical gestures of a person for operating a button or switch. Furthermore, the device of the invention must have the technical elements required for their installation, autonomous maintenance, and immediate use, either in switches that are already installed or in different ex-factory apparatus. All this is in accordance with the apparatus of claim 1. The claims depending on claim 1 describe particular embodiments of the apparatus of the invention. Other aspects of the invention are described in the independent embodiments.

"Gesture detection" or "gesture" is understood herein as any movement of a person or part of a person or of an object or part of an object, with the intention of activating or actuating the contactless switch. In other words, "gesture detection" can be simply understood as the passage of something or someone through a specific area in the proximity of the switch or the passage of a part of something or someone, for example, the hand of a person.

The present invention therefore has the particularity of providing at least one CEMF sensor in each element to be controlled. This sensor is installed in a support or substrate, which can be of two types, and in turn integrates an actuator and power supply means.

In a practical embodiment, the support of the sensor is a casing integrating the sensor *per se*, an electric battery, and an actuator which, in a practical embodiment, is an electric servomotor which operates the switch on which the substrate or support has been adhered by means of a moving element that is movable between two extreme positions. The support or casing has the particularity of providing a surface configured for the attachment thereof to any other surface.

This embodiment allows using the sensor on almost any button or set of buttons already installed in almost any application, turning "contact" elements into "contactless" elements in an absolutely hygienic manner, preventing or minimizing the risk of contagion almost immediately.

In another practical embodiment, the support of the sensor is a support plate on which the sensor is arranged connected with the actuator which is a conditioning circuit for conditioning the signal coming from the sensor so as to activate the element it controls, and power supply means that can be connected with the power supply of the apparatus in which it is installed. This embodiment allows integrating the device of the invention during manufacture, adapting the support or substrate and the actuator to any application or product that requires switches, turning them into precise contactless switches in an absolutely hygienic manner, preventing or minimizing the risk of contagion through the use thereof.

The operating principle of the apparatus is simple. The apparatus essentially comprises an oscillator circuit generating a sine (AC) wave and the output of which is connected to at least one antenna arranged in the body of the device itself. The circuit has the particularity of being a closed loop because the signal from the antenna is in turn configured as an input signal of the oscillator circuit. This particular configuration allows tracking the signal from the antenna, i.e., when there is a disruption and the magnitude of the field changes, this change will immediately affect the input of the oscillator circuit, so the sensitivity of the apparatus increases significantly, and furthermore makes the conventional emitter-receiver configuration described in the state of the art unnecessary. Another significant advantage is that said configuration is not affected by external noises because the closed-loop configuration cancels out noises that may exist in the signal. This closed-loop configuration, already described in document EP2980609 or in document EP3553477 belonging to the same applicant is applied in an environment that is hostile for electronics, in a novel manner with respect to the state of the art and taking advantage of the reliability, simplicity, and range (up to one meter) of the electromagnetic field sensor to turn contact switches into contactless switches that can be activated by means of the detection and interpretation of the gestures of a user within range of the sensor.

The CEMF technology applied by the present invention is based on the fact that, the human body, like any other existing object, has its own dielectric characteristics, dependent on materials, density, volume, temperature, and conductivity. The potential differences between the different objects lead to a plurality of electrostatic interactions between one object and another when they come into contact or when they are close to one another. This effect generates fluctuations in the electromagnetic field around the antenna, which are continuously measured by the apparatus. Precisely, the measurement of this signal from the antenna, that is, the measurement of the change in impedance of the antenna over time due to a disruption, in turn molds the controlled electric and magnetic field around the antenna and allows determining, depending on the change in impedance produced over time, which object, i.e., a person, an animal, or an inanimate object, has caused said disruption.

The scope of the present invention is defined by the claims. Throughout the description and claims, the word "comprises" and variants thereof do not seek to exclude other technical features, components, or steps. For those skilled in the art, other objects, advantages, and features of the invention will be inferred in part from the description and in part from practicing the invention. The following examples of use and associated figures are provided by way of non-limiting illustration. Furthermore, the present invention covers all the possible combinations of particular and preferred embodiments herein indicated.

### Brief Description of the Drawings

A series of drawings and diagrams which help to better understand the invention and are expressly related to an embodiment of said invention, taken as a non-limiting example thereof, are very briefly described below.
Figure 1 shows a diagram of the CEMF sensor implemented in the device of the invention.
Figure 2 shows a schematic view of the device of the invention in two operating sequences (Figure 2a and Figure 2b)

### Detailed Description of an Embodiment of the Invention

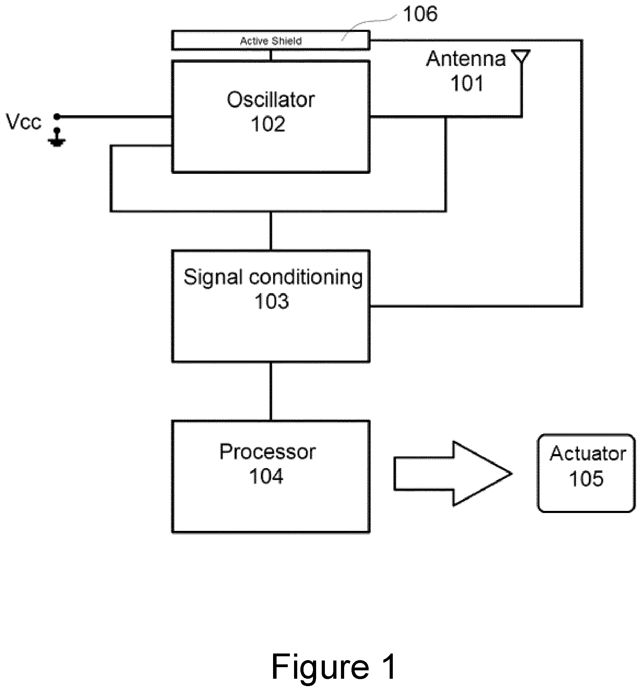

The invention is based on the implementation of the CEMF technology described in documents EP2980609 and/or EP3553477 and the indications of which are included herein by reference. Therefore, as can be observed in Figure 1, the CEMF sensor 100 is based on an antenna 101 which is connected with an oscillator circuit 102. The particularity of the CEMF sensor is that both the output and the input of the oscillator 102 are connected with the same antenna 101, such that the signal from the antenna 101 is feedback to the oscillator 102 itself. In other words, the emission of the signal of the oscillator 102 is proportional to the disruptions detected in the antenna 101, given that said disruptions are configured as the input of the oscillator circuit 102.

Moreover, the same input signal of the oscillator 102 is acquired by a processor 104 through a signal conditioning circuit converter 103. The processor 104 further comprises a memory or memories storing a program or programs made up of instructions which, when run by the processor 104, cause the CEMF sensor 100 to: (a) continuously acquire the signal generated around the antenna 101; (b) establish a behavioral pattern corresponding with the acquired signal, and (c) send an activation signal to the actuator 105 depending on the behavioral pattern corresponding with the signal acquired through the antenna 101.

One of the virtues of the present invention is that it is capable of emitting the electromagnetic field in a controlled manner by means of an active shield 106 by means of a low-impedance circuit, such that the electromagnetic field can be directed, through the only conductive element forming the emitter-receiver antenna, towards a zone with a certain influence and can be configured for each specific application, as will be described herein below.

As a result of this structure, the apparatus is capable of distinguishing, depending on the magnitude of the change, that is, on the generated disruption, the gesture a person performs (for example, it can identify the hand gesture for opening or closing a door, or detect the movement of the hand to the right side, which can mean "switching ON" or to the left side for "switching OFF"), and distinguishing said signal from the signal generated by an animal or any other object, given that the invention is based on the capacity of the apparatus to measure variations of the electromagnetic field existing around each of the antennas to which the apparatus is connected, since the apparatus can be connected with several antennas, with the particularity that each of the antennas acts independently with respect to the others, i.e., each antenna has the same capacities and functionalities in disruption detection, i.e., it emits a controlled electromagnetic field and in turn detects the disruptions of that field.

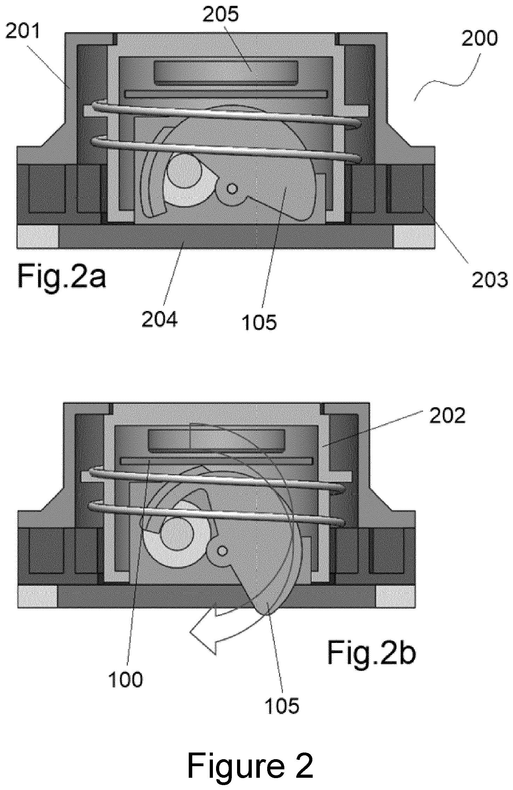

Figure 2 shows the main elements forming the physical structure of the device of the invention. The device consists essentially of the sensor 100 described in Figure 1 integrated in a support 200 comprising an upper casing 201 and a lower casing 203 which furthermore has a lower surface 204 which can be adhesive in a practical embodiment. The support 200 further comprises a switch 202 that can be operated in the case of an emergency. The actuator 105 itself, the power supply means 205, and the sensor 100, or at least the antenna 101, can be found inside the body of the switch 202.

As mentioned above, the device comprises two main embodiments depending on the intended use thereof. Therefore, for example, in a first embodiment the support 200 can be installed on a button or set of buttons already in operation. In this case, the actuator or actuators 105 can be an electric servomotor with a moving element that can move between an extended position (Figure 2b) and a retracted position (Figure 2a), such that when the sensor 100 detects the gesture of "pressing" the actuator 105, it operates the electric servomotor and the moving element moves to literally press the button on which it is located. The power supply means 205 in this case are an electric battery, preferably a button-type battery or the like.

Moreover, in a second embodiment, the substrate 200 is a support integrating the sensor 100, the actuator 105, and the power supply 205 is a current adaptor connected with the power supply of the device in which it is installed. Furthermore, in this case, the antenna 101 may or may not be integrated in the support 200, usually being arranged outside it. In this embodiment, the actuator 105 is an output signal conditioning circuit of the processor 104 of the sensor 100 configured for activating the relevant signal or signals.

As indicated, each sensor 100 can control at least one antenna 101 and at least one actuator 105, without an apparent limit to the number thereof. Therefore, for example, in a set of x buttons, there would be y antennas 101 and z actuators 105 connected with a single sensor 100, such that, by knowing which antenna 101 has detected which disruption, the required actuator 105 could be activated with precision.

## Claims

1. A method for detecting contactless touch by means of gesture detection, comprising the steps of:
installing at least one antenna (101) which is configured for receiving the signal of an electromagnetic field generated around same; and wherein said at least one antenna (101) is connected with a controlled electromagnetic field sensor (100) configured for generating an electromagnetic field around said antenna (101);
continuously measuring variations in the electric and magnetic field generated around the antenna (101);
detecting a gesture performed at a distance of less than one meter from the antenna (101), corresponding and proportional to a disruption in the electromagnetic field generated around the antenna (101); and
activating an actuator (105) depending on the detected gesture.

2. The method according to claim 1, which comprises adhering the substrate or support (200) integrating the sensor (100), at least one antenna (101), at least one actuator (105), and at least one supply battery (205) on a button or set of buttons.

3. The method according to claim 1, which comprises integrating the substrate or support (200) containing the sensor (100), at least one actuator (105), and power supply means (205) in a button or set of buttons, the at least one antenna (101) being arranged outside the substrate or support (200).

4. A device for detecting contactless touch by means of gesture detection, comprising:
an antenna (101) configured for receiving the signal of an electromagnetic field generated around same; and wherein said at least one antenna (101) is connected with a controlled electromagnetic field sensor (100) configured for generating an electromagnetic field around said antenna (101)
wherein the controlled electromagnetic field sensor (100) comprises at least one oscillator (102) connected with the antenna (101), such that the signal from the antenna (101) is feedback to the input of the oscillator (102); and wherein the input signal of the oscillator (102) is acquired by a processor (104) through a signal conditioning circuit (103); and
**characterized in that** the processor (104) comprises a memory or memories storing a program or programs made up of instructions which, when run by the processor (104), cause the sensor (100) to:
(a) continuously acquire the signal generated around the at least one antenna (101);
(b) detect a gesture performed in the proximity of the antenna (101) corresponding and proportional to a disruption in the electromagnetic field generated around the antenna (101); and
(c) activate an actuator (105) depending on the detected gesture.

5. The device according to claim 1, comprising a substrate or support (200) which is configured for being placed on a button or set of buttons (205) and integrating the sensor (100), at least one antenna (101), at least one actuator (105), and at least one supply battery (205).

6. The device according to claim 1, which comprises installing a substrate or support (200) in a button or set of buttons, wherein said substrate or support contains the sensor (100), at least one actuator (105), and power supply means (205), the at least one antenna (101) being arranged outside the support (200).
